# EUROPEAN PATENT APPLICATION

(11) **EP 2 958 184 A1**
(43) Date of publication of application: **23.12.2015**
(21) Application number: 15172754.2
(22) Date of filing: 18.06.2015
(51) Int. Cl.: H01M 10/42, H01M 10/46

(54) **RECHARGEABLE BATTERY AND MANAGEMENT METHOD THEREOF**

(30) Priority: 18.06.2014 TW 103121068
(71) Applicant: Cheerful Technology International Limited, Kowloon, Hong Kong (HK)
(72) Inventor: Chan, Yan Leng, Kwun Tong Kowloon Hong Kong (HK)
(74) Representative: DREISS Patentanwälte PartG mbB

(57) **Abstract**

A rechargeable battery (10, 20, 40) and a management method are provided. The rechargeable battery (10, 20, 40) includes a battery shell (12), a electricity storage module (24, 42) and a voltage adjustment module (22, 441). The battery shell (12) includes a positive electrode terminal (14) and a negative electrode terminal (16). The electricity storage module (24, 42) and the voltage adjustment module (22, 441) are configured inside the battery shell (12). The electricity storage module (24, 42) has a base-voltage and the voltage adjustment module (22, 441) is coupled to the electricity storage module (24, 42). Wherein, when the positive electrode terminal (14) and the negative electrode terminal (16) of the rechargeable battery (10, 20, 40) are respectively coupled to a load device, the voltage adjustment module (22, 441) may raise the base-voltage to a desire-voltage, and the rechargeable battery (10, 20, 40) provides the electric power in the desire-voltage with the positive electrode terminal (14) and the negative electrode terminal (16) to the load device.

## Description

### TECHNICAL FIELD

The present invention relates to a rechargeable battery and a management method thereof, and in particular, to a rechargeable battery applicable for various load devices and a management method thereof.

### BACKGROUND ART

Many electronic devices are designed to be light or easy to be carried, so external power lines need to be omitted for convenient carrying. Therefore, the electronic devices must be designed with an external battery or a built-in battery used as an electric power source. With the improvement of environmental awareness, users are willing to select rechargeable batteries to be used in the electronic devices. However, rechargeable batteries generally have a series of fixed specifications, and a user often can only select a rechargeable battery relatively matching an electronic device, but cannot select a rechargeable battery most suitable for the specification of the electronic device. Therefore, the maximum efficiency of the rechargeable battery cannot be achieved, and a circuit of the electronic device may be easily destroyed.

### SUMMARY OF THE INVENTION

In view of this, the present invention provides a rechargeable battery and a management method thereof, which are more suitable for the specification of a load device, thereby achieving the maximum performance between the rechargeable battery and the load device.

An embodiment of the present invention provides a rechargeable battery, comprising a battery shell, an electricity storage module, and a voltage adjustment module. The battery shell includes a positive electrode terminal and a negative electrode terminal, and the electricity storage module and the voltage adjustment module are accommodated in the battery shell. The electricity storage module has a base voltage. The voltage adjustment module is coupled to the electricity storage module. When the positive electrode terminal and the negative electrode terminal of the rechargeable battery are respectively connected to a load device, the voltage adjustment module adjusts the base voltage of the electricity storage module to a desired voltage, and the rechargeable battery provides electric power with the desired voltage for the load device through the positive electrode terminal and the negative electrode terminal of the battery shell.

An embodiment of the present invention provides a management method of a rechargeable battery, which is applicable to the above rechargeable battery. The rechargeable battery includes a battery shell, an electricity storage module, a voltage adjustment module, a charging module, and a charging judgment circuit. The battery shell includes a positive electrode terminal and a negative electrode terminal, and the electricity storage module, the voltage adjustment module, the charging module and the charging judgment circuit are accommodated in the battery shell. The method comprises: when the positive electrode terminal and the negative electrode terminal of the rechargeable battery are respectively connected to a load device to discharge the rechargeable battery, the voltage adjustment module adjusting a base voltage of the electricity storage module to a desired voltage, and the rechargeable battery providing electric power with the desired voltage for the load device through the positive electrode terminal and the negative electrode terminal of the battery shell, so that the load device can operate normally. Moreover, the method further comprises: when the positive electrode terminal and the negative electrode terminal of the rechargeable battery are respectively connected to a charging device to charge the rechargeable battery, the charging judgment circuit triggering the charging module according to a charging signal transferred by the charging device, so that the charging device charges the electricity storage module to the base voltage through the charging module, and thus electric power of the rechargeable battery is restored to a saturated state.

Based on the above, the rechargeable battery and the management method thereof in the embodiments of the present invention use the voltage adjustment module to adjust an output voltage of the electricity storage module to provide electric power with the desired voltage for the load device, and the rechargeable battery can directly form an electronic loop with the load device or the charging device through the positive electrode terminal and the negative electrode terminal on the battery shell. Therefore, the convenience and applicability for the rechargeable battery to cooperate with the load device and the charging device can be improved, and the electric power loss and waste caused by conversion of electric energy between different devices can be reduced.

In order to further understand the technologies, methods, and effects adopted by the present invention for given objectives, reference can be made to the detailed description and drawings of the present invention, whereby the objectives, features, and characteristics of the present invention can be understood deeply and specifically. However, the accompanying drawings and appendixes are only provided for reference and illustration, but not used to limit the present invention.

### BRIEF DESCRIPTION OF DRAWINGS

FIG. 1 is a schematic exterior view of a rechargeable battery depicted according to an embodiment of the present invention.
FIG. 2 is a schematic functional block diagram of a rechargeable battery depicted according to an embodiment of the present invention.
FIG. 3 is a schematic flow chart of a management method of a rechargeable battery depicted according to an embodiment of the present invention.
FIG. 4 is a schematic functional block diagram of a rechargeable battery depicted according to another embodiment of the present invention.
FIG. 5 is a schematic flow chart of a management method of a rechargeable battery depicted according to another embodiment of the present invention.

### DETAILED DESCRIPTION OF THE PREFERRED EMBODIMENTS

In general, a voltage specification of a rechargeable battery installed by a user in an electrical product is inconsistent with a voltage specification of the electrical product, and accordingly, the present invention is made to improve a traditional rechargeable battery to provide electric power better meeting the voltage specification of the electrical product.

### [An embodiment of a rechargeable battery]

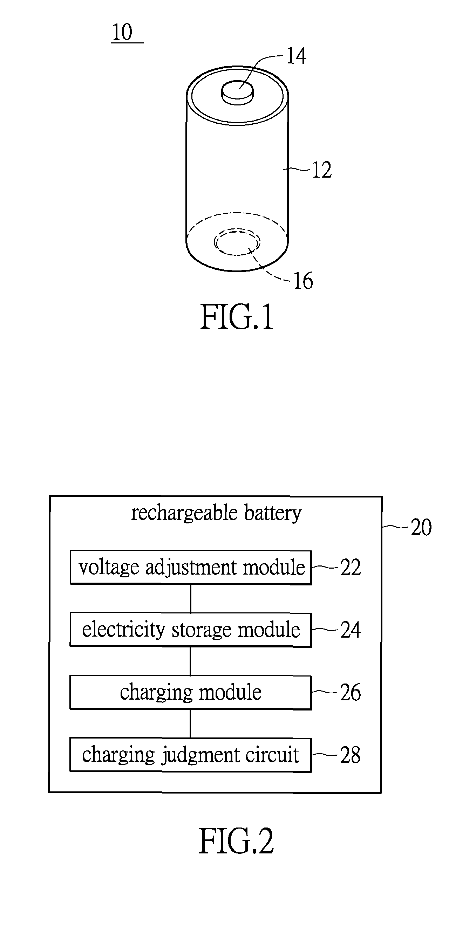

FIG. 1 is a schematic exterior view of a rechargeable battery depicted according to an embodiment of the present invention. Referring to FIG. 1, a rechargeable battery 10 in this embodiment has a battery shell 12, where a positive electrode terminal 14 and a negative electrode terminal 16 are disposed on the battery shell 12. The positive electrode terminal 14 and the negative electrode terminal 16 of the rechargeable battery 10 may, for example, be respectively installed or disposed in a load device (not shown) of a portable electronic product or a common electric appliance, to provide electric power for the load device to perform operational functions.

FIG. 2 is a schematic functional block diagram of a rechargeable battery depicted according to an embodiment of the present invention. Referring to FIG. 2, a rechargeable battery 20 in this embodiment comprises a voltage adjustment module 22, an electricity storage module 24, a charging module 26, and a charging judgment circuit 28. Referring to both FIG. 1 and FIG. 2, the voltage adjustment module 22, the electricity storage module 24, the charging module 26, and the charging judgment circuit 28 of the rechargeable battery 20 in this embodiment are configured to be accommodated in the battery shell 12. Stored electric power of the electricity storage module 24 can be inputted or outputted through the positive electrode terminal 14 and the negative electrode terminal 16 on the battery shell 12.

An example for the rechargeable battery in this embodiment to provide electric power is illustrated below. Referring to FIG. 2 again, as a basic element for containing electric quantity, the electricity storage module 24 has a base voltage, for example, 1.2 V. The voltage adjustment module 22 of the rechargeable battery 20 in this embodiment is coupled to the electricity storage module 24. The voltage adjustment module 22, for example, increases the base voltage of the electricity storage module 24 to a desired voltage, for example, 1.5 V, where the desired voltage, for example, meets a voltage specification of electric power required by the load device. In another example, the voltage adjustment module 22 can reduce the base voltage (for example, 1.5 V) of the electricity storage module 24 to another desired voltage (for example, 1.2 V). It should be noted that, in implementing the rechargeable battery of the present invention, a key (for example, a number key), a selection line or a touch panel may be added as required to set the base voltage and the desired voltage of the rechargeable battery, for more flexibly implementing a voltage adjustment function (voltage increasing or reducing) of the rechargeable battery. The base voltage and the desired voltage of the electricity storage module 24 in this example may be different, whereby the voltage of the electricity storage module 24 can be increased or reduced through the voltage adjustment function. In another embodiment, the electricity storage module 24 may have the rechargeable battery with 7.1 Volt, 3 Volt or 2.4 Volt, for instance two batteries with 1.2 Volt in series. In addition, the electricity storage module 24 may have the rechargeable battery basically outputted 9 Volt or 12 Volt for convenience.

For more simply and clearly disclosing the whole technical means of the present invention, in the following aspect, the voltage adjustment module 22 is described to increase the base voltage to the desired voltage. However, persons skilled in the art can understand another aspect where the voltage adjustment module 22 reduces the voltage, which thus will not be described in detail.

More specifically, when the rechargeable battery 20 is disposed in the load device to output electric power of the electricity storage module 24, the voltage adjustment module 22 increases the base voltage (for example, 1.2 V) of the electricity storage module 24 to the desired voltage (for example, 1.5 V) at first, for meeting a voltage value of electric power required by the load device. Then, the load device can receive electric power with the desired voltage the same as a voltage specification required by the load device through the positive electrode terminal 14 and the negative electrode terminal 16 on the battery shell 12 (shown in FIG. 1) of the rechargeable battery 20.

When the rechargeable battery 10, 20 in this example is actually used to output electric power to the load device, because the desired voltage (for example, 1.5 V) of the rechargeable battery 10, 20 is the same as a voltage specification (for example, 1.5 V) of electric power required by the load device, even if the base voltage (for example, 1.2 V) of the electricity storage module 24 of the rechargeable battery 20 is less than the voltage specification required by the load device, the rechargeable battery 10, 20 of the present invention provides electric power with the desired voltage by increasing the base voltage, thereby meeting the voltage specification required by the load device, and thus more effectively using stored electric power of the rechargeable battery 20. In this way, when the rechargeable battery 10, 20 of the present invention is actually used, electric power suitable for the load device can be provided without any voltage conversion circuit.

An example for the rechargeable battery in this embodiment to store electric power is illustrated below. Referring to FIG. 2 again, the charging judgment circuit 28 is coupled to the charging module 26. The charging judgment circuit 28, for example, judges whether a charging signal is transferred by a charging device (not shown). When the rechargeable battery 20 is configured to be connected to the charging device and the charging device is connected to the mains supply and turned on to enable the rechargeable battery 20 to be charged, the charging judgment circuit 28 receives a charging signal from the charging device. Further, the charging module 26 coupled to the charging judgment circuit 28, for example, can receive an external electric power and store the electric power in the electricity storage module 24.

Referring to both FIG. 1 and FIG. 2, when the rechargeable battery 10 in this example is disposed in the charging device to receive the external electric power of the charging device for charging, the charging judgment circuit 28 triggers operation of the charging module 26 according to the charging signal from the charging device, and the charging device can charge the electricity storage module 24 through the charging module 26. It is should be noted that the charging device can charge the electricity storage module 24 to the base voltage via the charging module 26.

When the rechargeable battery 10, 20 in this example is actually used to receive electric power on the charging device for charging, because the base voltage (for example, 1.2 V) is charged via the charging module 26 which is supplied from the charging device, the rechargeable battery 10, 20 can be directly accommodated in the charging device by means of the battery shell 12 and the positive electrode terminal 14 and the negative electrode terminal 16 on the battery shell 12. In this way, the rechargeable battery 10, 20 provided by the present invention can be applicable to existing charging devices without any voltage conversion circuit.

It should be noted that, only one of the voltage adjustment module 22 and the charging module 26 of the rechargeable battery 20 in this embodiment operates at the same time. Specifically, when the rechargeable battery 20 provides electric power for the load device for discharging, the voltage adjustment module 22 increases the base voltage and the charging module 26 is in an open circuit state; and when the rechargeable battery 20 receives electric power of the charging device for charging, the charging module 26 charges the electricity storage module 24 and the voltage adjustment module 22 is in an open circuit state. Therefore, the rechargeable battery 20 performs discharging and charging through the voltage adjustment module 22 and the charging module 26 respectively.

### [An embodiment of a management method of a rechargeable battery]

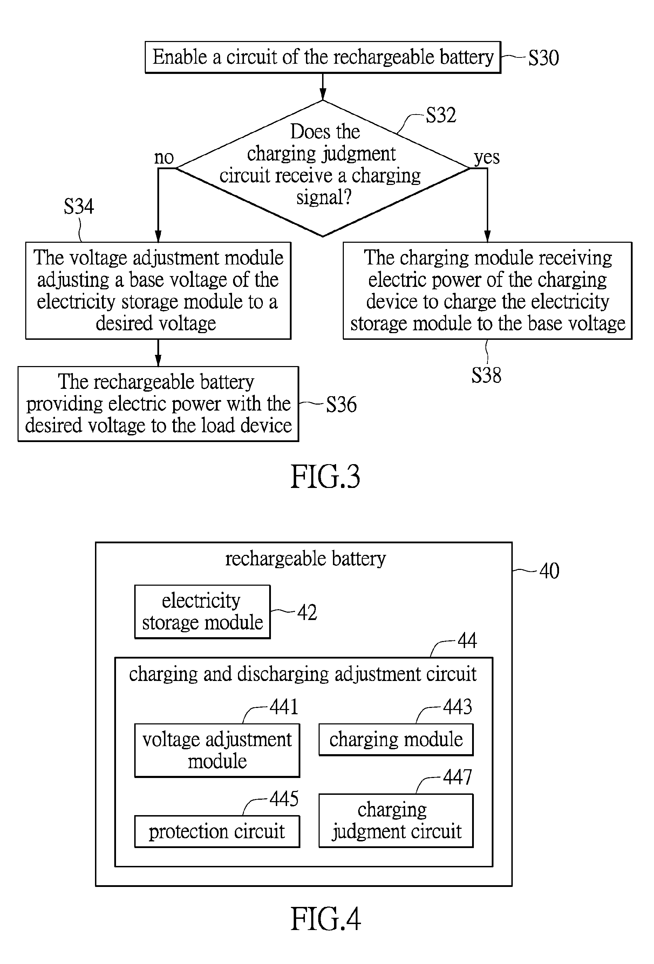

The present invention provides an embodiment of a management method of a rechargeable battery. FIG. 3 is a schematic flow chart of a management method of a rechargeable battery depicted according to an embodiment of the present invention. Referring to FIG. 1, FIG. 2, and FIG. 3, the method in this embodiment is applicable to the above rechargeable battery 20, and the detailed flow of the method in this embodiment is described below in combination with elements in FIG. 2.

First, because the rechargeable battery 20 is accommodated in the load device or the charging device by means of the battery shell 12 to form a closed loop, as shown in step S30, a circuit of the rechargeable battery 20 is enabled. Then, as shown in step S32, the charging judgment circuit 28 detects whether a charging signal is received. In this embodiment, the charging judgment circuit 28 is used to determine whether to turn on the charging module 26, to coordinate turn-on control of one of the voltage adjustment module 22 and the charging module 26. If the charging judgment circuit 28 does not receive the charging signal, as shown in step S34, the voltage adjustment module 22 enables a circuit thereof to increase a base voltage of the electricity storage module 24 to a desired voltage. For example, a base voltage of 1.2 V is increased to a desired voltage of 1.5 V. Then, as shown in step S36, the rechargeable battery 20 provides electric power with the desired voltage to the load device. It should be noted that, in the actual operation process of increasing the voltage, the desired voltage may be actually maintained between 1.3 V and 1.8 V.

On the other hand, if the charging judgment circuit 28 receives the charging signal, it indicates that the rechargeable battery 20 is already accommodated in the charging device to get ready to receive electric power for charging. In this case, the charging module 26 controls the voltage adjustment module 22 to stop outputting the desired voltage, and as shown in step S38, receives electric power of the charging device to charge the electricity storage module 24 to the base voltage, so that the rechargeable battery 20 returns to an adequate electric power state.

### [Another embodiment of a rechargeable battery]

The present invention provides another embodiment of a rechargeable battery. FIG. 4 is a schematic functional block diagram of a rechargeable battery depicted according to another embodiment of the present invention. Referring to FIG. 4, a rechargeable battery 40 in this embodiment comprises an electricity storage module 42 and a charging and discharging adjustment circuit 44. The charging and discharging adjustment circuit 44 further includes a voltage adjustment module 441, a charging module 443, a protection circuit 445, and a charging judgment circuit 447. It should be noted that, specific functions of the electricity storage module 42, the voltage adjustment module 441, the charging module 443 and the charging judgment circuit 447 of the rechargeable battery 40 in this embodiment are the same as those of the electricity storage module 24, the voltage adjustment module 22, the charging module 26, and the charging judgment circuit 28 of the rechargeable battery 20 in FIG. 2 and accordingly will not be described again. Moreover, the electricity storage module 42 and the charging and discharging adjustment circuit 44 of the rechargeable battery 40 in this embodiment may also be accommodated in the battery shell 12 in FIG. 1, so the rechargeable battery 40 can also be configured to be connected, through the positive electrode terminal 14 and the negative electrode terminal 16 on the battery shell 12, to a load device or a charging device for discharging or charging.

Referring to FIG. 4 again, the protection circuit 445 in this embodiment can judge whether a current generated when the rechargeable battery 40 outputs electric power exceeds an admissible value, for example, an admissible value of an internal circuit of the rechargeable battery 40 or an admissible value of a load current of a load device. If the current generated when the rechargeable battery 40 outputs the electric power exceeds a load, the protection circuit 445 directly reduces a desired voltage of the electric power output by the rechargeable battery 40, to ensure that the output current does not exceed the limit and prevent the internal circuit of the rechargeable battery 40 or a circuit of the load device are burned down by the too large current.

Referring to FIG. 1, FIG. 2, and FIG. 4 again, in the embodiments provided in the present invention, the rechargeable battery 10, 20, and 40 is, for example, a dry cell, an NiMH battery, alkaline rechargeable battery, or a NiCd battery. The battery shell 12 of the rechargeable battery 10 is, for example, a battery shell with an AA specification.

### [Another embodiment of a management method of a rechargeable battery]

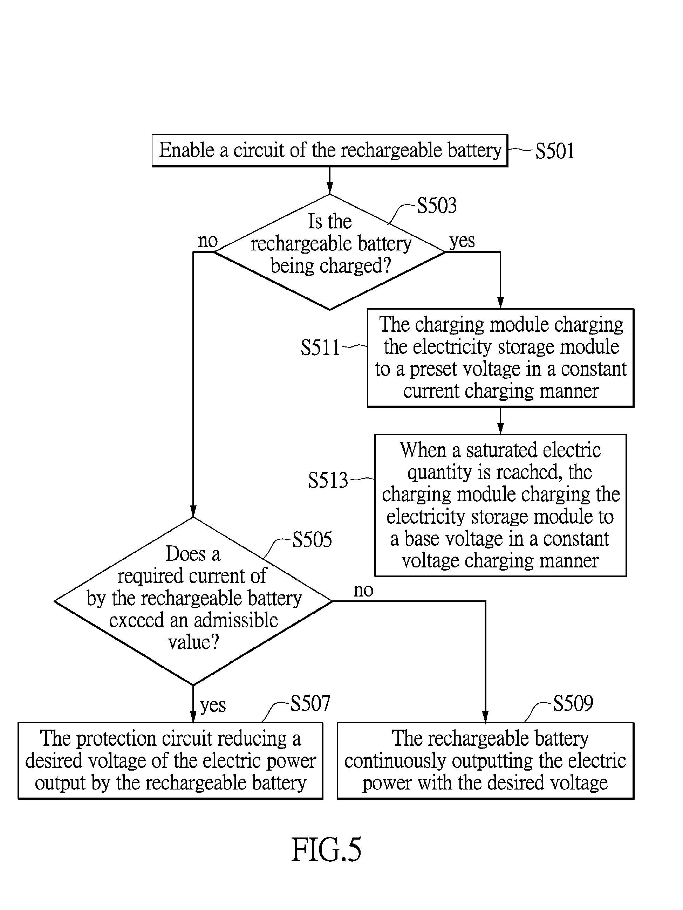

The present invention provides another embodiment of a management method of a rechargeable battery. FIG. 5 is a schematic flow chart of a management method of a rechargeable battery depicted according to another embodiment of the present invention. Referring to FIG. 1, FIG. 4, and FIG. 5, the method in this embodiment is applicable to the above rechargeable battery 40, and the detailed flow of the method in this embodiment is described below in combination with elements in FIG. 4.

First, because the rechargeable battery 40 is accommodated in the load device or the charging device by means of the battery shell 12 to form a closed loop, as shown in step S501, a circuit of the rechargeable battery 40 is enabled. Then, as shown in step S503, the charging judgment circuit 447 of the charging and discharging adjustment circuit 44 indicates that the rechargeable battery 40 is in a charging state or a discharging state. Then, if the rechargeable battery 40 is in the discharging state, as shown in step S505, the protection circuit 445 of the charging and discharging adjustment circuit 44 judges whether a current generated when electric power is output to the load device exceeds an admissible value. If yes, as shown in step S507, the protection circuit 445 reduces a desired voltage of the electric power output by the rechargeable battery; if not, as shown in step S509, the rechargeable battery 40 continuously outputs the electric power with the desired voltage to the load device. Therefore, the management method of the rechargeable battery in this embodiment can not only provide a voltage applicable for the load device, but also monitor an output current of the rechargeable battery 40 to protect the circuit of the rechargeable battery 40 and the circuit of the load device from being burned down.

On the other hand, if the charging judgment circuit 447 receives the charging signal, it indicates that the rechargeable battery 40 is already accommodated in the charging device to get ready to receive electric power for charging. In this case, as shown in step S511, the charging module 443 of the charging and discharging adjustment circuit 44 controls the voltage adjustment module411 to stop outputting the desired voltage, and receives electric power of the charging device in a constant current charging manner to charge the electricity storage module 42 to a preset voltage. The preset voltage has a value less than that of the base voltage, for example, 1.2 V. Then, as shown in step S513, when the electricity storage module 42 reaches a saturated electric quantity, the charging module 443 charges the electricity storage module 42 to the base voltage in a constant voltage charging manner.

To sum up, through the provision of the voltage adjustment module for increasing the base voltage of the electricity storage module, the protection circuit for adjusting the output electric power, and the battery shell directly accommodated in the load device and the charging device, the rechargeable battery and the management method thereof provided in the embodiments of the present invention can directly provide a load voltage best meeting the load device without an additional voltage conversion circuit, thereby saving the cost for the voltage conversion circuit, and also omitting a complex procedure for a user to fabricate the voltage conversion circuit.

The above description only provides practicable embodiments of the present invention. All equivalent changes and modifications made according to the claims of the present invention should fall within the scope of the present invention.

## Claims

1. A rechargeable battery (10, 20, 40), comprising:
a battery shell (12), including a positive electrode terminal (14) and a negative electrode terminal (16);
an electricity storage module (24, 42), having a base voltage; and
a voltage adjustment module (22, 441), coupled to the electricity storage module (24, 42), wherein
the electricity storage module (24, 42) and the voltage adjustment module (22, 441) are accommodated in the battery shell (12), and when the positive electrode terminal (14) and the negative electrode terminal (16) of the rechargeable battery (10, 20, 40) are respectively connected to a load device, the voltage adjustment module (22, 441) adjusts the base voltage of the electricity storage module (24, 42) to a desired voltage, and the rechargeable battery (10, 20, 40) provides electric power with the desired voltage for the load device through the positive electrode terminal (14) and the negative electrode terminal (16) of the battery shell (12).

2. The rechargeable battery (10, 20, 40) according to claim 1, further comprising:
a charging module (26, 443); and
a charging judgment circuit (28, 447), coupled to the charging module (26, 443), wherein
the charging module (26, 443) and the charging judgment circuit (28, 447) are accommodated in the battery shell (12), and when the positive electrode terminal (14) and the negative electrode terminal (16) of the rechargeable battery (10, 20, 40) are respectively connected to a charging device, the charging judgment circuit (28, 447) triggers the charging module (26, 443) according to a charging signal transferred by the charging device, so that the charging device charges the electricity storage module (24, 42) to the base voltage through the charging module (26, 443).

3. The rechargeable battery (10, 20, 40) according to claim 1 or 2, further comprising a protection circuit (445) accommodated in the battery shell (12), wherein when the protection circuit (445) judges that a required current of the load device provided by the rechargeable battery (10, 20, 40) through the positive electrode terminal (14) and the negative electrode terminal (16) on the battery shell (12) exceeds an admissible value, the protection circuit (445) reduces the desired voltage of the electric power provided by the rechargeable battery (10, 20, 40).

4. The rechargeable battery (10, 20, 40) according to claim 2, wherein when the charging judgment circuit (28, 447) triggers the charging module (26, 443) according to the charging signal transferred by the charging device, the charging module (26, 443) controls the voltage adjustment module (22, 441) to stop outputting the desired voltage.

5. The rechargeable battery (10, 20, 40) according to claim 1, wherein the rechargeable battery (10, 20, 40) is a dry cell.

6. The rechargeable battery (10, 20, 40) according to claim 1, wherein the rechargeable battery (10, 20, 40) is a rechargeable dry cell.

7. The rechargeable battery (10, 20, 40) according to claim 5 or 6, wherein the base voltage is the output voltage of the electricity storage module (24, 42) and the desired voltage basically is 1.5V, 3V, 9V or 12V

8. The rechargeable battery (10, 20, 40) according to claim 3, wherein the voltage adjustment module (22, 441), the charging module (26, 443), the charging judgment circuit (28, 447), and the protection circuit (445) form a charging and discharging adjustment circuit (44).

9. A management method of a rechargeable battery (10, 20, 40), wherein the rechargeable battery (10, 20, 40) includes a battery shell (12), an electricity storage module (24, 42), a voltage adjustment module (22, 441), a charging module (26, 443), and a charging judgment circuit (28, 447), wherein the electricity storage module (24, 42), the voltage adjustment module (22, 441), the charging module (26, 443), and the charging judgment circuit (28, 447) are accommodated in the battery shell (12) and the battery shell (12) has a positive electrode terminal (14) and a negative electrode terminal (16), the management method comprising:
when the positive electrode terminal (14) and the negative electrode terminal (16) of the rechargeable battery (10, 20, 40) are respectively connected to a load device, the voltage adjustment module (22, 441) adjusting a base voltage of the electricity storage module (24, 42) to a desired voltage, and the rechargeable battery (10, 20, 40) providing electric power with the desired voltage for the load device through the positive electrode terminal (14) and the negative electrode terminal (16) of the battery shell (12); and
when the positive electrode terminal (14) and the negative electrode terminal (16) of the rechargeable battery (10, 20, 40) are respectively connected to a charging device, the charging judgment circuit (28, 447) triggering the charging module (26, 443) according to a charging signal transferred by the charging device, so that the charging device charges the electricity storage module (24, 42) to the base voltage through the charging module (26, 443).

10. The management method according to claim 9, further comprising:
where the voltage adjustment module (22, 441) adjusts the base voltage of the electricity storage module (24, 42) to the desired voltage, when a required current of the load device provided by the rechargeable battery (10, 20, 40) through the positive electrode terminal (14) and the negative electrode terminal (16) of the battery shell (12) exceeds an admissible value, reducing the desired voltage of the electric power provided by the rechargeable battery (10, 20, 40).

11. The management method according to claim 9, further comprising:
when the positive electrode terminal (14) and the negative electrode terminal (16) of the rechargeable battery (10, 20, 40) are respectively connected to the charging device, controlling the voltage adjustment module (22, 441) to stop outputting the desired voltage.

12. The management method according to claim 9, further comprising:
when the positive electrode terminal (14) and the negative electrode terminal (16) of the rechargeable battery (10, 20, 40) are respectively connected to the charging device, the charging module (26, 443) charging the electricity storage module (24, 42) to a preset voltage lower than the base voltage in a constant current charging manner, and then charging the electricity storage module (24, 42) to the base voltage in a constant voltage manner.
